# EUROPEAN PATENT SPECIFICATION

(11) **EP 2 333 888 B1**
(45) Date of publication and mention of the grant of the patent: **01.10.2014**
(21) Application number: 10192209.4
(22) Date of filing: 23.11.2010
(51) Int. Cl.: H01M 8/12, H01M 4/86, H01M 4/90

(54) **Low-Resistance ceramic electrode for a solid oxide fuel cell**
Keramikelektrode mit geringem Widerstand für eine Festoxidbrennstoffzelle
Électrode céramique à faible résistance pour pile à combustible d'oxyde solide

(30) Priority: 10.12.2009 US 635316
(43) Date of publication of application: 15.06.2011
(73) Proprietor: Delphi Technologies, Inc., Troy, MI 48007 (US)
(72) Inventor: Jain, Kailash C., Troy, MI 48098 (US); Kerr, Rick D., 48430, MI Fenton (US); Gillispie, Bryan A., Macomb Township, MI 48044 (US)
(74) Representative: Robert, Vincent

(56) References cited:
- EP-A2- 1 394 884
- WO-A1-2008/116312
- WO-A2-02/089243

## Description

### TECHNICAL FIELD

The present invention relates to solid oxide fuel cells (SOFCs); more particularly, to composition and structure of the electrode elements of SOFCs; and most particularly, to an improved electrode structure and formulation that decreases resistance and increases power density, thereby improving performance.

### BACKGROUND OF THE INVENTION

Prior art planar SOFCs use a thin electrolyte, typically zirconia doped with yttria (YSZ), which is supported on an Ni-YSZ cermet acting as an anode. This composite is known as a "bilayer" over which a cathode electrode is deposited consisting of an ionic conducting layer and a porous catalyst, typically a mixed ionic and electronic conductor (MIEC). The cathode MIEC material is predominantly an electronic conductor with some ionic conductivity.

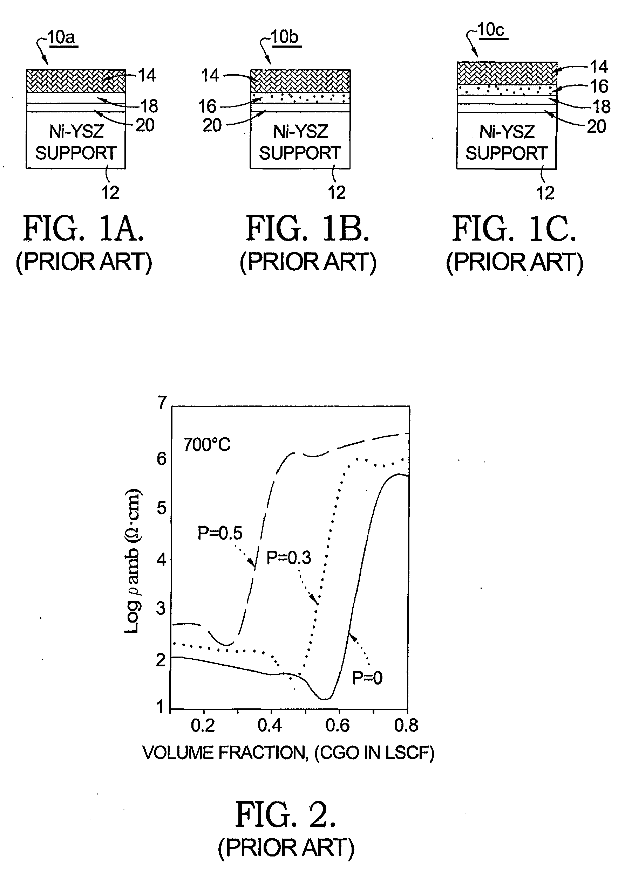

At the cathode, oxygen is reduced and the ionic species pass through the electrolyte membrane to the anode where a fuel, typically hydrogen, is oxidized to produce electric power. Resistance of the cathode, both ohmic and polarization, plays a major role in overall cell resistance and therefore can greatly affect electrochemical performance, thereby impacting power. FIGS. 1A-1C shows three examples 10a,10b,10c of prior art cathode electrodes on a Ni-YSZ anode-supported yttria-stabilized-zirconia (YSZ) electrolyte 12. These structures comprise MIEC 14, a mixed layer of MIEC plus an ionic conductor 16, ionic conductor alone 18, and YSZ electrolyte 20. If lanthanum-strontium-cobalt-iron (LSCF) is used as a cathode material, the scheme shown in FIG. 1A is desirable because the power output from the scheme shown in FIG. 1B degrades rapidly at ∼800°C (the cell operating temperature). This is due to the formation of SrZrO₃ as LSCF reacts with YSZ at these temperatures. This configuration for a cathode electrode, however, is more suitable for lanthanum-strontium-manganite (LSM) or lanthanum-nickel-iron (LNF) cathode materials.

One known approach to decreasing the cathode resistance (polarization) is to add a doped (Sm, Gd, Nd, Y etc.) ceria-based ionic conducting phase in the MIEC material to obtain a dual-phase composite cathode. The addition of an ionic conducting phase (SDC, YDC, GDC, LSGM, etc.) in the cathode (LSCF, BSCF, LNF, LSM, etc.) improves oxygen diffusion rate and charge transfer of oxygen ions at the electrode/electrolyte interface. FIG. 1C shows a three layer cathode, wherein a mixed layer (ionic + MIEC) 16 is inserted between the ionic conducting layer 18 and an MIEC layer 14. The combination of two materials with different rate-limiting processes complements the limiting steps of each. For example, gadolinia-doped ceria (CGO) may provide rapid mass transport, while LSCF may provide sites for efficient charge transfer and surface exchange. This is shown in FIG. 2, which shows that the ambipolar resistance of the composite electrode can be minimized through proper selection of volume fraction of electronic and ionic phases and porosity. The three labeled curves are for porosities of 0, 0.3, and 0.5, respectively. The composite cathode thus extends the three-phase boundary (TPB) length and extends the reaction zone of the cathode, resulting in reduced polarization. Porosity is thus an important aspect of the present invention, as described below.

The principle of electrode optimization, however, suggests to strengthen the ionic network by increasing the volume fraction of the ionic conducting phase while keeping the electronic network percolating between the current collector and the electrolyte; e.g., to move the minimum in ambipolar resistance to higher ionic concentrations. This is difficult, as the ionic phase is nearly insulating, and as its volume fraction increases the electronic conductivity drops by several orders of magnitude. In addition, the requirement of a certain amount of porosity in the mixed layer further limits the supply of electrons through the thickness of the layer as the supply of electrons depends on the electronic resistivity of the composite cathode material and its connectivity to the current collector and electrolyte.

EP 1 394 884 A2 discloses an electrolyte membrane for a fuel cell operable in medium temperature range wherein the electrolyte membrane has a three-layer structure including a hydrated electrolyte layer containing moisture and dense layers made of a hydrogen permeable material that are formed on both sides of the electrolyte layer. WO 2008/116312 A1 discloses a solid state electrochemical cell comprising a dense electrolyte layer.

What is needed in the art is a composite electrode consisting of a high fraction of ionic conducting phase with robust ionic and electronic paths efficiently supplying electrons and/or ions between the current collector and the electrolyte.

What is further needed in the art is a functional layer resistant to "poisons" to further promote favorable electrochemical reactions within the electrode.

It is a primary object of the present invention to significantly reduce resistance and thereby improve the power density (W/cm²), durability, and power output of an Ni-YSZ anode-supported SOFC under low levels of poison, such as sulfur, and certain fuel mixtures containing hydrocarbons.

### SUMMARY OF THE INVENTION

The present invention is about an electrode structure for a solid oxide fuel cell, comprising an anode layer; an electrolyte layer adjacent said anode layer; a first mixed ionic and conductor cathode layer having a first ionic conductivity; and a second mixed ionic and conductor cathode layer having a second ionic conductivity greater than said first ionic conductivity disposed between said first mixed ionic and conductor cathode layer and said electrolyte layer. The second mixed ionic and conductor cathode layer is laterally discontinuous. The electrode structure in further comprises an ionic conducting layer disposed between said electrolyte layer and said second mixed ionic and conductor cathode layer. Also, said laterally discontinuous second mixed ionic and conductor cathode layer includes openings allowing portions of said first mixed ionic and electric layer into direct contact with the layer below said laterally discontinuous second mixed ionic and conductor cathode layer. The openings are formed in a laterally-extensive pattern selected from the group consisting of a grid, a concentric, and random. The anode layer comprises nickel, yttrium, and zirconium and the electrolyte layer comprises ytrium and zirconium.The material of said first mixed ionic and electronic conductor cathode layer is La_{0.6}Sr_{0.4}Co_{0.2}Fe_{0.8}O_{3-δ}.. The material of said second mixed ionic and electronic conductor cathode layer is a mixture of La_{0.6}Sr_{0.4}Co_{0.2}Fe_{0.8}O_{3-δ}.. and an ionic conducting phase which comprises any ceria-doped material selected from the group consisting of Y₂O₃, Gd₂O₃, Nd₂O₃, Yb₂O₃. The electrode structure further comprises a variable-valance cation selected from the group consisting of Fe, Co, and Mn comprised between about 0.2 weight percent and about 2.0 weight percent of said ionic conducting phase. The ionic conducting phase in said mixed ionic and electronic conductor material is present between about 0 weight percent and about 70 weight percent and may even be between about 30 weight percent and about 65 weight percent. At least one of said first and second mixed ionic and conductor cathode layers comprises at least one pore former.present before sintering in an amount between about 0 weight percent and about 100 weight percent which may be limited to an amount between about 10 weight percent and about 50 weight percent.The pore former is selected from the group consisting of carbon black, starch, graphite, and non-soluble organics. The ionic layer comprises Sm_{0.2}Ce_{0.8}O₂ and Fe₂O₃.

The electrode structure further comprises a plurality of said first mixed ionic and conducting cathode layer interspersed with a plurality of said second mixed and ionic conducting cathode layer and a functional layer disposed adjacent one of said anode layer and said cathode layer.The electrode structure further comprises a functional layer disposed within one of said anode layer and said cathode layer said functional layer being segmented to be laterally discontinuous. Said functional layer comprises at least one compound selected from the group consisting of Cu-CeO₂, noble metals, mixed ionic and conducting materials, and sulfur/carbon absorber materials. The first and second mixed ionic and conductor layers are sintered at a temperature between about 950°C and about 1100°C during manufacture of said electrode.

The invention is also about a solid oxide fuel cell comprising an electrode structure including an anode layer; an electrolyte layer adjacent said anode layer; a first mixed ionic and conductor cathode layer having a first ionic conductivity; and a second mixed ionic and conductor cathode layer having a second ionic conductivity greater than said first ionic conductivity disposed between said first mixed ionic and conductor cathode layer and said electrolyte layer, wherein said second mixed ionic and conductor cathode layer is laterally discontinuous.

Briefly described, lateral segmentation of the mixed layer on a cathode electrode allows a higher fraction of ionic phase in a mixed layer, resulting in improved microstructure that provides higher specific surface area for electrochemical reaction. This is accomplished by using an MIEC layer over the segmented layer that supplies electrons laterally and vertically through the thickness of the mixed layer. Adequate connectivity between cathode current collector and electrolyte for electrons is established through openings in the segmented layer, assuring efficient charge transfer and improved activity of the electrocatalyst in the porous cathode. Cell resistance is reduced and power output is improved. Further, the invention can efficiently incorporate a variety of functional layers on the anode electrode to improve protection from poisons and certain fuel mixtures that degrade cell performance, and can reduce stresses between fuel cell components while maintaining adequate connectivity with the anode current collector and electrolyte via an Ni-YSZ anode.

### BRIEF DESCRIPTION OF THE DRAWINGS

The present invention will now be described, by way of example, with reference to the accompanying drawings, in which:
FIGS. 1A, 1B, and 1C are schematic cross-sectional views of three different prior art SOFC electrode structures having non-segmented, continuous layers;
FIG. 2 is a graph showing the effect of porosity on ambipolar resistance at 700°C as a function of volume fraction of respective electronic and ionic phases in an SOFC electrode;
FIGS. 3A, 3B, and 3C are schematic cross-sectional views of three electrode embodiments in accordance with the present invention;
FIGS. 4A and 4B are graphs showing power increase and cell impedance reduction in a first pair of test and control cells;
FIGS. 5A and 5B are graphs showing power increase and cell impedance reduction in a second pair of test and control cells; and
FIGS. 6 and 7 are exemplary patterns for formation of a second mixed ionic and conducting layer in accordance with the present invention.

Corresponding reference characters indicate corresponding parts throughout the several views. The exemplifications set out herein illustrates currently preferred embodiments of the invention, and such exemplifications are not to be construed as limiting the scope of the invention in any manner.

### DESCRIPTION OF THE PREFERRED EMBODIMENTS

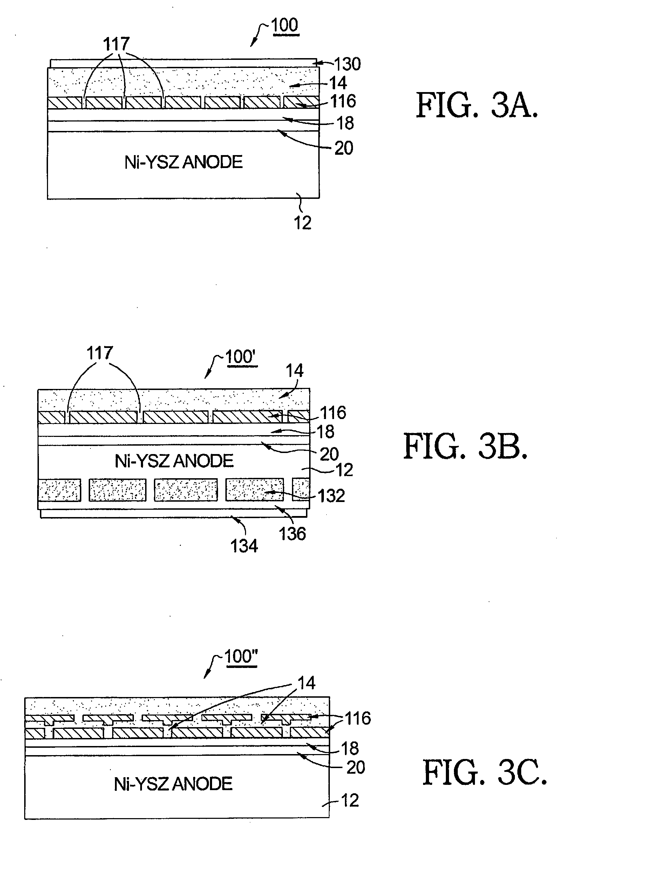

Referring to FIG. 3A, in an SOFC electrode 100 in accordance with the present invention, a segmented mixed conducting layer 116 is shown, formed for example of LSCF plus a samaria-doped ceria ion conducting phase material (SDC), over which a continuous electronically-conducting MIEC layer 14 efficiently provides electrons through the thickness of the mixed conductivity layer 116. The electron and ion conducting layer 116 is porous and discretely segmented in the lateral direction as well, having a plurality of gaps 117 allowing direct contact of MIEC layer 14 with ionic conductor layer 18 (or electrolyte layer 20 if ionic conductor layer 18 is omitted). (Mixed conducting layer 16 as shown in FIG. 1C is also porous but relatively dense and continuous.) As the supply of oxygen is a function of the cathode's microstructural properties, such as porosity and pore size, the net effect is to enhance the ionic flux to the electrolyte 20 and thus increase the power density of the fuel cell 100. Further, this arrangement also provides lateral and vertical, and thus three dimensional, electron conducting paths assuring strong ionic and electronic networks percolating between the cathode current collector 130 and the electrolyte 20.

Referring to FIG. 3B, in an alternative embodiment 100' the Ni-YSZ support anode can be modified using segmented layer architecture by including a functional layer 132. Functional layer 132 promotes resistance to poisons, for example sulfur, carbon, and phosphorus, and/or specific reactions, for example, with CO, CH₄, and other hydrocarbons, on the anode surface. The functional layer may include Cu-CeO₂, noble metals, MIEC materials, sulfur/carbon adsorber materials, and/or other application-specific materials. FIG. 3B also shows the anode current collector 134 and a preferable contact layer 136.

FIG. 3C shows another embodiment 100" comprising alternating thin (∼2 µm) layers of mixed MIEC + ionic material 116 and MIEC material 14 over ionic conducting layer 18. These layers promote enhanced oxygen surface exchange, reduce stresses due to thermal expansion mismatch between fuel cell components, and shield electrolyte layer 20. Similarly, the anode electrode 12 can be protected from certain effects of the incoming fuel mixture.

The benefits can be demonstrated of the segmented mixed conducting layer arrangement 100 shown in FIG. 3A on the cathode electrode. The mixed conducting layer is a mechanical mixture of an ionic conducting phase, for example, samaria-doped ceria (SDC), and a mixed ionic and electronic conducting (MIEC) material, for example, La_{0.6}Sr_{0.4}Co_{0.2}Fe_{0.8}O_{3-δ}, (LSCF) material. Alternatively, a more homogeneous mixture can be prepared via liquid phases using soluble salts or through solid-state sintering and milling. The ionic conducting phase that can be used is any ceria-doped material (Y₂O₃, Gd₂O₃, Nd₂O₃, Yb₂O₃, etc.), with or without a variable-valance cation as a sintering aid (0.2 -2 wt%), such as Fe, Co, and Mn oxides. Typical doping level of ceria is about 3 -30 mole% with 10-20 mole% preferred. The amount of ionic conducting phase in the MIEC material can be between about 0 wt% and 70 wt% with 30-65 wt% preferred.

The microstructures of both layers 116 and 14 are controlled by including some pore formers in their compositions. The amount of pore former can be between about 0 wt% and about 100 wt% of the solid phase or even higher with 10-50 wt% preferred.

The constraint on the amount of pore former is the mechanical strength of the resulting films. Pore formers are materials such as carbon black, starch, graphite, and the like, non-soluble organics, and/or other appropriate materials that decompose to leave the desired porosity in the sintered layer. Similarly, the composition of MIEC material in layer 14, such as LSCF, can vary in terms of relative amounts of its constituents while maintaining a pervoskite structure. The LSCF material can be deficient in A-sites or even a mixture of the two-phase pervoskite structures. Other MIEC materials that are predominantly electronic conductors (barium-strontium-cobalt-iron oxide, lanthanum-nickel-iron oxide, lanthanum-strontium-cobalt oxide, lanthanum-strontium-iron oxide, lanthanum-strontium-manganese oxide etc. and their combinations) can also comprise layers 116 and 14. Finally, low sintering temperatures between about 950°C and about 1100°C are preferred to avoid the formation of resistive phases at the electrode/electrolyte surface, to maximize the population of active sites, to minimize grain growth, and to maintain high catalytic activity. The sintering time at the temperature, thus, can vary from about 10 hours to about 0.5 hours.

### Example 1: Electrochemical Tests and Results

Four 1" diameter cells (two tests and two controls), each with 2.5 cm² active area as described in Table 1 below, were prepared to demonstrate the performance improvements due to the segmented mixed (LSCF + SDCF) layer structure (FIG. 3a test vs. FIG. 1c control).

**Table 1**

| Cell # | Layer 16, 116 LSCF/SDCF, wt. % | Segmented ? | Black carbon layer 16,116/layer 14 wt% | Sintering temperature, °C and time | Power density, W/cm² @ 0.7V, 50% H₂ in N₂ |
|---|---|---|---|---|---|
| 1 | 70/30 | No, Control (1) | 10/20 | 1050°C -2h | 0.8 |
| 2 | 70/30 | Yes, Test (2) | 10/20 | 1050°C -2h | 0.95 |
| 3 | 40/60 | No, Control (3) | 10/20 | 1050°C -2h | 0.96 |
| 4 | 40/60 | Yes, Test (4) | 10/20 | 1050°C -2h | 1.05 |

These cells were built on an 11-micron YSZ electrolyte 20 supported on a 0.45 mm Ni/YSZ substrate 12 acting as an anode. All the layers were screen printed using pastes obtained by mixing ∼60 wt% of solid phases with an organic binder.

First, the electrolyte surfaces of these cells were covered with ionic layer 18 comprising Sm₀₂Ce₀₈O₂ with 2 wt% Fe₂O₃. The thickness after sintering at 1200°C for 2 hours was 4-5 µm.

Next, segmented mixed layer 116 and continuous LSCF layer 14 were screen printed to produce cathodes with active areas of 2.5 cm². The thickness of the layer 116 was about one half of layer 14 (20-30) µm. The total thickness of the cathode including layer 18 after sintering at ∼1050°C was ∼40 µm. The details of the cell fabrication are summarized in Table 1. Silver and nickel meshes with platinum lead wires and pastes were used to establish the current collectors. The air and fuel sides of the cells were isolated using a glass sealing material. The NiO/YSZ composite anode was reduced, in situ, at 800°C for 1 hour in a hydrogen gas atmosphere (50% H₂ in N₂).

The cathode side of the cell was exposed to flowing air at a rate of 2.3 L/min and the anode side was exposed to a flowing stream of 50% hydrogen at a rate of 2.3 L/min. The electrochemical measurements were conducted at 750°C using a potentiostat/galvanostat (Parstat^{®} 2273) and power-generating characteristics as a function of time were measured at a polarization potential of 0.7V.

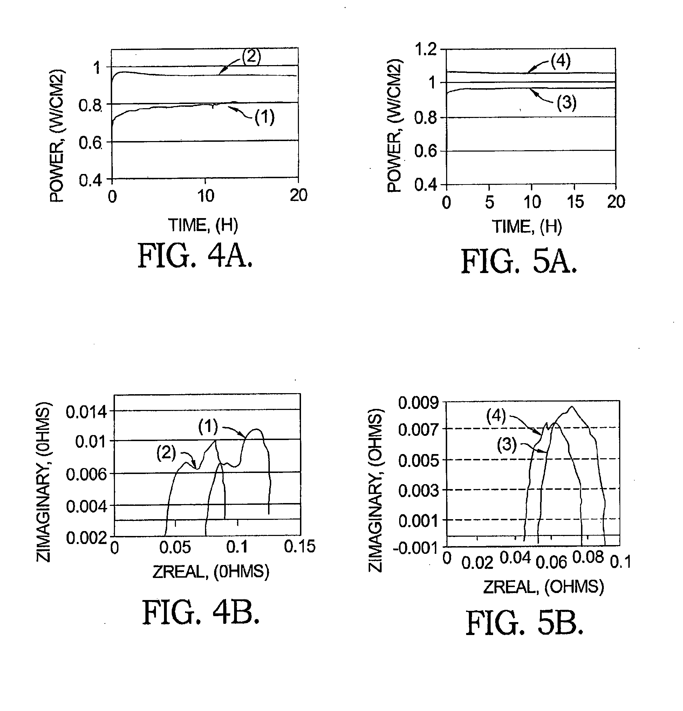

Referring to FIGS. 4A and 4B, a comparison is shown of power generation characteristics of non-segmented Control Cell No. 1 and segmented Test Cell No. 2 with 30 wt.% ionic phase in the mixed layer, Cell 2 representing embodiment 100 of the present invention, operating at 0.7V in 50% H₂ in N₂ as a fuel mixture. It is seen that the proposed cathode yields an improvement in power density of approximately a 18% (FIG. 4A) and a reduction in cell impedance (FIG. 4B).

Referring to FIGS. 5A and 5B, a comparison is shown of power generation characteristics of another pair of control and test cells 3,4 with 60 wt.% ionic phase in the mixed layer. An increase of the ionic phase in the mixed layer improved the power output of the control cell, compared to that shown in FIG. 4, by approximately 20% (FIG. 5a) and reduced the cell impedance (FIG. 5B). Additionally, the segmented architecture of the test cell further improves the power by approximately 9%.

In summary, an SOFC segmented electrode in accordance with the present invention provides at least the following benefits:
a) a high performance low resistance electrode arrangement that reduces total charge transfer resistance;
b) a scheme suitable for both cathode and anode electrodes;
c) helps in achieving high conductivity ionic, electronic, and gas diffusion paths in, for example, the cathode electrode;
d) implementation on the cathode improves power density by about 15%;
e) a segmented functional layer in the anode that can promote specific reactions and provide increased tolerance toward electrode poisons; and
f) alternating thin layers of MIEC and mixed MIEC plus ionic can promote oxygen surface exchange, reduce thermal expansion coefficient of the composite, and shield the electrolyte layer.

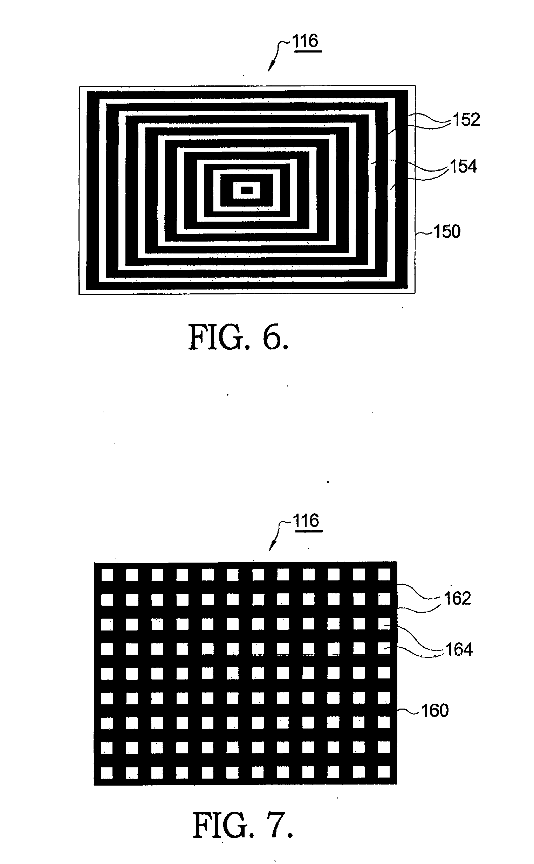

Referring to FIGS. 6 and 7, segmented mixed layer 116 may be formed in either a regular pattern such as concentric pattern 150 comprising alternating bands 152,154 (FIG. 6) or grid pattern 160 comprising grid lines 162 and grid openings 164 (FIG. 7), or as a random pattern (not shown). In either of patterns 150,160, either of the bands 152,154 or either of the grid lines 162 and grid openings 164 may define either openings 117 or layer 116.

## Claims

1. An electrode (100) structure for a solid oxide fuel cell, comprising:
an anode layer (12);
an electrolyte layer (20) adjacent said anode layer (12);
a first mixed ionic and electronic conductor cathode layer (14) having a first ionic conductivity;
a second mixed ionic and electronic conductor cathode layer (116) having a second ionic conductivity greater than said first ionic conductivity disposed between said first mixed ionic and electronic conductor cathode layer (14) and said electrolyte layer (20), said second mixed ionic and electronic conductor cathode layer (116) being laterally discontinuous, said laterally discontinuous second mixed ionic and electronic conductor cathode layer (116) includes openings (164) allowing portions of said first mixed ionic and electric layer (14) into direct contact with the layer below said laterally discontinuous second mixed ionic and electronic conductor cathode layer (116), **characterized in that** the material of said second mixed ionic and electronic conductor cathode layer (116) is a mixture of La_{0.6}Sr_{0.4}Co_{0.2}Fe_{0.8}O_{3-δ}, and an ionic conducting phase.

2. An electrode structure (100) in accordance with Claim 1 further comprising an ionic conducting layer (18) disposed between said electrolyte layer (20) and said second mixed ionic and electronic conductor cathode layer (116).

3. An electrode structure (100) as set in any of the preceding claim wherein said openings (164) are formed in a laterally-extensive pattern.

4. An electrode structure (100) as set in any of the preceding claim wherein said anode layer (12) comprises nickel, yttrium, and zirconium.

5. An electrode structure (100) as set in any of the preceding claim wherein said ionic conducting phase comprises any ceria-doped material.

6. An electrode structure (100) as set in any of the preceding claim wherein said ionic conducting phase comprises a variable-valance cation.

7. An electrode structure (100) in accordance with Claim 6 wherein said variable-valence cation comprises between about 0.2 weight percent and about 2.0 weight percent of said ionic conducting phase.

8. An electrode structure (100) as set in any of the preceding claim wherein said ionic conducting phase in said mixed ionic and electronic conductor material is present up to 70 weight percent.

9. An electrode structure (100) as set in any of the preceding claim wherein at least one of said first and second mixed ionic and electronic conductor cathode layers comprises at least one pore former.

10. An electrode structure (100) in accordance with Claim 2 in combination with any of the preceding claim wherein said ionic conducting layer (18) comprises Sm_{0.2}Ce_{0.8}O₂ and Fe₂O₃.

11. An electrode structure (100) as set in any of the preceding claim further comprising a functional layer (132) disposed adjacent or within one of said anode layer (12) and said cathode layer.

12. An electrode structure (100) in accordance with Claim 11 wherein said functional layer (132) comprises at least one compound selected from the group consisting of Cu-CeO₂, noble metals, mixed ionic and conducting materials, and sulfur/carbon absorber materials.

13. A solid oxide fuel cell comprising an electrode structure (100) as set in any of the preceding claim.

## Patentansprüche

1. Eine Elektroden(100)-Struktur für eine Festoxidbrennstoffzelle, die aufweist:
eine Anodenschicht (12);
eine Elektrolytschicht (20) angrenzend an die Anodenschicht (12);
eine erste "Misch-Ionen und Elektronen-Leiter"-Kathodenschicht (14) mit einer ersten Ionenkonduktivität;
eine zweite "Misch-Ionen und Elektronen-Leiter"-Kathodenschicht (116) mit einer zweiten Ionenkonduktivität größer als die erste Ionenkonduktivität, die zwischen der ersten "Misch-Ionen und Elektronen-Leiter"-Kathodenschicht (14) und der Elektrolytschicht (20) angeordnet ist, wobei die zweite "Misch-Ionen und Elektronen-Leiter"-Kathodenschicht (116) lateral diskontinuierlich ist, wobei die lateral diskontinuierliche zweite "Misch-Ionen und Elektronen-Leiter"-Kathodenschicht (116) Öffnungen (164) umfasst, die ermöglichen, dass Teile der ersten "Misch-Ionen und Elektronen"-Kathodenschicht (14) einen direkten Kontakt mit der Schicht unter der lateral diskontinuierlichen zweiten "Misch-Ionen und Elektronen-Leiter"-Kathodenschicht (116) haben, **dadurch gekennzeichnet, dass** das Material der zweiten "Misch-Ionen und Elektronen-Leiter"-Kathodenschicht (116) eine Mischung ist aus La_{0,6}Sr_{0,4}Co_{0,2}Fe_{0,8}O_{3-δ} und einer ionenleitenden Phase.

2. Eine Elektrodenstruktur (100) gemäß Anspruch 1, die weiter eine ionenleitende Schicht (18) aufweist, die zwischen der Elektrolytschicht (20) und der zweiten "Misch-Ionen und Elektronen-Leiter"-Kathodenschicht (116) angeordnet ist.

3. Eine Elektrodenstruktur (100) gemäß einem der vorhergehenden Ansprüche, wobei die Öffnungen (164) in einem lateral erstreckenden Muster ausgebildet sind.

4. Eine Elektrodenstruktur (100) gemäß einem der vorhergehenden Ansprüche, wobei die Anodenschicht (12) Nickel, Ytrium und Zirkonium aufweist.

5. Eine Elektrodenstruktur (100) gemäß einem der vorhergehenden Ansprüche, wobei die ionenleitende Phase ein Ceroxid-dotiertes Material aufweist.

6. Eine Elektrodenstruktur (100) gemäß einem der vorhergehenden Ansprüche, wobei die ionenleitende Phase ein Kation variabler Valenz aufweist.

7. Eine Elektrodenstruktur (100) gemäß Anspruch 6, wobei das Kation variabler Valenz zwischen ungefähr 0,2 Gewichtsprozent und ungefähr 2,0 Gewichtsprozent der ionenleitenden Phase aufweist.

8. Eine Elektrodenstruktur (100) gemäß einem der vorhergehenden Ansprüche, wobei die ionenleitende Phase in dem "Misch-Ionen und Elektronen-Leiter"-Material bis zu 70 Gewichtsprozent vorhanden ist.

9. Eine Elektrodenstruktur (100) gemäß einem der vorhergehenden Ansprüche, wobei zumindest eine der ersten und zweiten "Misch-Ionen und Elektronen-Leiter"-Kathodenschichten zumindest einen Porenbilder aufweist.

10. Eine Elektrodenstruktur (100) gemäß Anspruch 2 in Kombination mit einem der vorhergehenden Ansprüche, wobei die ionenleitende Schicht (18) Sm_{0,2}Ce_{0,8}O₂ und Fe₂O₃ aufweist.

11. Eine Elektrodenstruktur (100) gemäß einem der vorhergehenden Ansprüche, die weiter eine Funktionsschicht (132) aufweist, die angrenzend oder innerhalb einer der Anodenschicht (12) und der Kathodenschicht angeordnet ist.

12. Eine Elektrodenstruktur (100) gemäß Anspruch 11, wobei die Funktionsschicht (132) zumindest eine Verbindung aufweist, die aus der Gruppe ausgewählt ist, die aus Cu-CeO₂, Edelmetallen, Misch-Ionen- und Leiter-Materialien und Schwefel/Kohlenstoff-Absorber-Materialien besteht.

13. Festoxidbrennstoffzelle, die eine Elektrodenstruktur (100) gemäß einem der vorhergehenden Ansprüche aufweist.

## Revendications

1. Structure d'électrode (100) pour une pile à combustible à oxyde solide, comprenant :
une couche anode (12) ;
une couche électrolyte (20) adjacente à ladite couche anode (12) ;
une première couche cathode (14) ionique mélangée et conductrice électronique ayant une première conductivité ionique ;
une seconde couche cathode (116) ionique mélangée et conductrice électronique ayant une seconde conductivité ionique plus forte que ladite première conductivité ionique, disposée entre ladite première couche cathode (14) ionique mélangée et conductrice électronique et ladite couche électrolyte (20), ladite seconde couche cathode (116) ionique mélangée et conductrice électronique étant latéralement discontinue, ladite seconde couche cathode ionique mélangée et conductrice électronique (116) latéralement discontinue inclut des ouvertures (164) permettant à des portions de ladite première couche cathode (14) ionique mélangée et conductrice électronique de venir en contact direct avec la couche au-dessous de ladite seconde couche cathode (116) ionique mélangée et conductrice électronique latéralement discontinue,
**caractérisée en ce que** le matériau de ladite seconde couche cathode (116) ionique mélangée et conductrice électronique est un mélange de La_{0,6}Sr_{0,4}Co_{0,2}Fe_{0,8}O_{3-δ} et d'une phase conductrice ionique.

2. Structure d'électrode (100) selon la revendication 1, comprenant en outre une couche conductrice ionique (18) disposée entre ladite couche électrolyte (20) et ladite seconde couche cathode (116) ionique mélangée et conductrice électronique.

3. Structure d'électrode (100) selon l'une quelconque des revendications précédentes, dans laquelle lesdites ouvertures (164) sont formées dans un motif s'étendant latéralement.

4. Structure d'électrode (100) selon l'une quelconque des revendications précédentes, dans laquelle ladite couche anode (12) comprend du nickel, de l'yttrium et du zirconium.

5. Structure d'électrode (100) selon l'une quelconque des revendications précédentes, dans laquelle ladite phase conductrice ionique comprend un matériau quelconque dopé au cérium.

6. Structure d'électrode (100) selon l'une quelconque des revendications précédentes, dans laquelle ladite phase conductrice ionique comprend un cation à valence variable.

7. Structure d'électrode (100) selon la revendication 6, dans laquelle ledit cation à valence variable comprend entre environ 0,2 % en poids et environ 2,0 % en poids de ladite phase conductrice ionique.

8. Structure d'électrode (100) selon l'une quelconque des revendications précédentes, dans laquelle ladite phase conductrice ionique dans ledit matériau ionique mélangé et conducteur électronique est présente jusqu'à 70 % en poids.

9. Structure d'électrode (100) selon l'une quelconque des revendications précédentes, dans laquelle l'une au moins de ladite première et de ladite seconde couche cathode ionique mélangée et conductrice électronique comprend au moins un formateur de pores.

10. Structure d'électrode (100) selon la revendication 2, en combinaison avec l'une quelconque des revendications précédentes, dans laquelle ladite couche conductrice ionique (18) comprend du Sm_{0,2}Ce_{0,8}O₂ et du Fe203.

11. Structure d'électrode (100) selon l'une quelconque des revendications précédentes, comprenant en outre une couche fonctionnelle (132) disposée adjacente ou à l'intérieur d'une couche parmi ladite couche anode (12) et ladite couche cathode.

12. Structure d'électrode (100) selon la revendication 11, dans laquelle ladite couche fonctionnelle (132) comprend au moins un composé choisi parmi le groupe comprenant Cu-CeO₂, les métaux nobles, les matériaux ioniques mélangés et conducteurs, et les matériaux absorbant le soufre et/ou le carbone.

13. Pile à combustible à oxyde solide comprenant une structure d'électrode (100) selon l'une quelconque des revendications précédentes.
